# EUROPEAN PATENT SPECIFICATION

(11) **EP 0 353 064 B1**
(45) Date of publication and mention of the grant of the patent: **15.01.1997**
(21) Application number: 89307644.8
(22) Date of filing: 27.07.1989
(51) Int. Cl.: B29C 47/06, B29C 47/14, B29C 47/58

(54) **Method and apparatus for feeding a plurality of molten resin jet streams into T die**
Verfahren und Vorrichtung zum Fördern einer Mehrzahl von geschmolzenen Harzstrahlen in eine T-Matrize
Procédé et dispositif pour alimenter une filière en T par une pluralité de courants de résines fondues

(30) Priority: 27.07.1988 JP 187598/88
(43) Date of publication of application: 31.01.1990
(73) Proprietor: TOMY MACHINERY MANUFACTURING COMPANY LIMITED, Shinagawa-ku Tokyo (JP)
(72) Inventor: Shinmoto, Jitsumi, Shinagawa-ku Tokyo (JP)
(74) Representative: Pacitti, Pierpaolo A.M.E.

(56) References cited:
- DE-A- 1 479 111
- US-A- 3 443 277
- US-A- 3 825 383
- US-A- 3 909 170
- US-A- 4 051 293
- US-A- 4 082 488
- US-A- 4 731 004
- US-E- 27 769

## Description

### FIELD OF THE INVENTION:

The present invention relates to a method and an apparatus for feeding a plurality of molten resin jet streams into a T die adapted to form film members of films, sheet and the like each consisting of different resins or adapted to use to produce laminated sheets each consisting of a plurality of different resins.

### BACKGROUND OF THE INVENTION:

In general, in the case of the production of films or the like by using a T die, a thermoplastic resin fed from a hopper into an extruder is melted while being transported through an air-tight cylinder nd the melted resin is extruded toward the T die. The molten resin is discharged through an elongated discharge port of the T die, whereby the desired films or the like are obtained.

The combinations of the extruders and the T dies are used to form cast films, sheets, laminated sheets and so on.

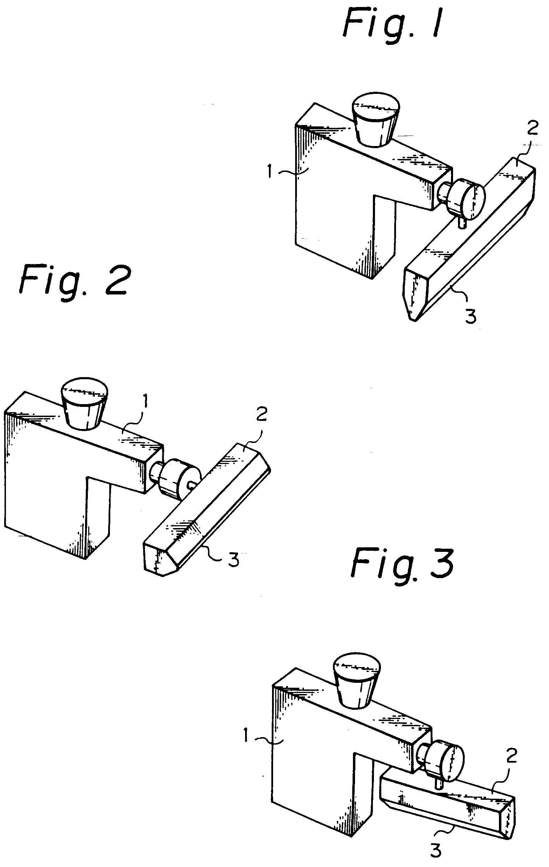

Of these plastic forming methods, as shown in Figs. 1 and 2, the extrusion direction A of an extruder and a longitudinally extended discharge port 3 of a T die 2 are maintained mutually perpendicular. In the case of the production of laminated sheets as shown in Fig. 3, the extrusion direction A of the extruder 1 is so determined as to be in parallel with the longitudinal direction of the discharge port 3 of the T die 2. The reasons why the relative position between the extruder 1 and the T die 2 is changed is as follows. In the case of the production of laminated sheets, film members to be laminated must be transported in the direction perpendicular to the discharge port 3 of the T die. When the extrusion direction A of the extruder 1 is maintained perpendicular to the discharge port 3 of the T die 2, the extruder interrupts the transportation of a film member to be laminated cannot be transported in the direction perpendicular to the discharge port 3 of the T die 2.

Each of the production methods described above can produce not only film members each consisting of a single layer and laminates each consisting of a single layer but also film members each consisting of a plurality of layers and laminates each consisting of also a plurality of layers. When the plastic products each consisting of a plurality of layers, not only the quality of the produced film members and the like can be improved but also the production costs can be reduced to a minimum.

In the case of the production of film members each consisting of a plurality of layers, the molten resin jets extruded from a plurality of extruders 1 are fed into the single T die in such a way that the mixture of molten resins within the T die or after discharged from the discharge port 3 can be prevented and each layer is overlaid one upon the other, whereby the film members each consisting of a plurality of different resin layers can be produced.

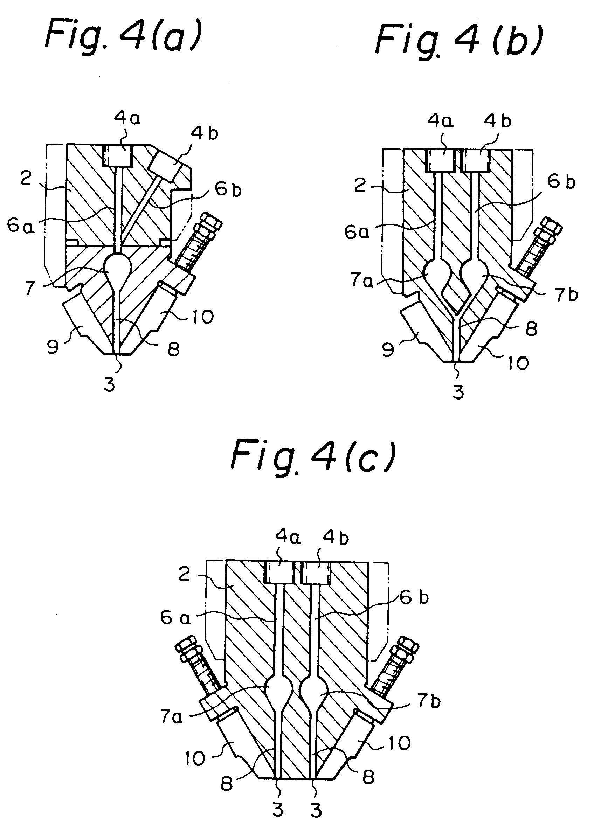

More particularly, in the case of the production of film members each consisting of a plurality of different resin layers, a required number of extruders 1 are disposed at their respective suitable positions depending upon an object to be formed. Thereafter the extrusion port of each extruder 1 is communicated through an adapter with its corresponding molten resin jets input port of the T die so that a plurality of different molten resin jets are fed into the T die 2 through the molten resin feed passages defined within the adapters. As typically shown in Figs. 4(a), (b) and (c), various types of T dies are used to form sheets each consisting of two layers. In each type, two inlet ports 4a and 4b of the T die are communicated through specially designed and constructed adapters 5a and 5b with two extruders (not shown). The molten resin jets fed to the inlet ports 4a and 4b flow through feed passage 6a and 6b, respectively, and after they are joined, they flow into a manifold 7 extended in the longitudinal direction of the T die 2 (in the direction perpendicular to Fig. 4) and then a feed passage with a small cross section 8. Thereafter they are discharged through the discharge port 3 whose cross section is defined by a stationary lip 9 and a movable lip 10 as a two-layer film member in which the thickness of each layer is uniform in the widthwise direction. In the case of the T die 2 shown in Fig. 4(b), the molten resin jets fed to the inlet ports 4a and 4b flow independent feed passages 6a and 6b and manifolds 7a and 7b in the order named and are united within a feed passage 8 and then are discharged through the discharge port 3 as a two-layer film. In the case of the T die as shown in Fig. 4(c), the molten resin jets fed to the inlet ports 4a and 4b flow through the independent feed passages 6a and 6b, manifolds 7a and 7b and feed passages 8a and 8b in th order named are discharged as a single layer film member through each of independent discharge ports 3. Thereafter the discharged single layer film members are combined into a two-layer film member.

In general, in the case of the production of plastic articles using the extruders 1 and the T die, in order to improve the efficiency of operation, at least one extruder 1 is used and disposed the position as shown in Fig. 1 or 2 so as to form cast films or sheets. Furthermore the position of the extruder 1 is changed as shown in Fig. 3 to produce laminates.

However, even though it is easy to switch the position of the T die 2 through 90° with respect to the extrusion machine 1, in the case of the projection of plastic articles each consisting of a plurality of layers, the positions of a plurality of molten resin jets inlet ports are considerably changed due to the switching of the relative position of the T die with respect to the extruder 1; that is, it is difficult to switch the position of the inlet ports of the T die 2. In other words, in the case of the formation of plastic articles each consisting of a plurality of different resin layers, in order to switch the position of the T die 2, adapters adapted to communicate the discharge ports of the extruders with their corresponding inlet ports of the T die must be prepared and the operation for exchanging the adapters must be carried out. Especially in the case of the production of plastic article each consisting of more than three layers, the inlet ports of the T die 2 and the adapters are increased in number. This causes a considerably troublesome problem.

In the case of winding a multi-layer film member around a take-up roll, in some cases it happens that the inward and outward resin layers must be reversed. In this case, in the conventional methods and apparatuses, the positions for communicating each extruder and the T die must be changed, which is very cumbersome.

Furthermore in the conventional production of multi-layer film members, they must be so formed that the thickness of each layer becomes uniform in the widthwise direction. And the film members each having a plurality of resin layers which are different in thickness are rejected as defective articles.

However, in the case of film members each having a plurality of different resin layers, except the fact that the thickness of each resin layer is made uniform in the widthwise direction, it was found out that they can be applied in various fields.

### SUMMARY OF THE INVENTION:

The present invention was made to overcome the above and other problems encountered in the conventional methods and apparatus and has for its object to provide a method and apparatus for feeding a plurality of different molten resin jets into a T die in which when a plurality of different molten resin jets extruded from a plurality of extruders are fed into a single T die, the molten resin jets are fed from their predetermined directions to unit them at a single position without causing the mixture of molten resins; and the relative position of the interface between the adjacent molten resin layers with respect to the longitudinal discharge port of the T die can be freely adjusted, whereby a plurality of different molten resin jets can be fed into the T die.

Another object of the present invention is to provide a method and apparatus for feeding a plurality of different molten resin jets into a T die, in which the switching of the relative positions of a plurality of extruders with respect to a single die can be carried out in an extremely simple manner; and the order of the layers of a multi-layer film member can be reversed a so in a simple manner.

A further object of the present invention is to provide a method and apparatus for feeding a plurality of different resin jets into a T die which can form a film member in which the thickness of each resin layer varies in the widthwise direction.

According to a first aspect of the present invention there is provided a method for feeding a plurality of molten resin jet streams into a T die of the type in which a plurality of molten resin jet streams flowing from their predetermined directions into a single resin passage extending through said T die are combined without mixing with each other, the molten resin jet streams thus combined being then fed into said T die, the method comprising adjusting, depending upon the construction of a film member to be produced, the relative positional relationship between the interfaces of said combined molten resin jet streams in said resin feed passage with respect to an elongated discharge port of said T die, characterised in that said adjustment of the relative positional relationship between said interfaces comprises a twisting rotation of said interfaces through a selectable predetermined angle about the axis of the resin feed passage, said adjustment being subsequent to the formation of said interfaces.

According to a second aspect of the present invention there is provided an apparatus for feeding a plurality of molten resin jet streams into a T die comprising a resin feed passage in communication with said T die and a directional control valve which combines a plurality of molten resin jet streams flowing from respective predetermined directions into said resin feed passage without causing mixing thereof, said apparatus including adjustment means for adjusting the relative positional relationship between the interfaces of said combined molten resin jet streams in said resin feed passage with respect to an elongated discharge port of said T die, characterised in that said adjustment means comprises means for effecting a twisting rotation of said interfaces through a selectable predetermined angle about the axis of the resin feed passage, said adjustment means being disposed downstream of said directional control valve.

In this manner, a plurality of molten resin jet streams fed into the T die is discharged as a film member having a desired construction.

The method and apparatus for feeding a plurality of molten resin jet streams into a T die in accordance with the present invention are designed as described above, in the case of a plurality of molten resin jet streams extruded from a plurality of extruders being fed into one t die, they are fed from their predetermined directions, respectively, at one place and united or combined without mixing with each other. The relative positional relationship between the interfaces of the adjacent molten resin jet streams combined on the one hand and the longitudinal direction of the discharge port of the T die can be freely adjusted and the combined or united molten resin jet streams can be fed into the T die. Furthermore, the relative positional relationship between a plurality of extruders and one T die can be switched in an extremely simple manner. Moreover the order of laminated layers can be revised in a simple manner and it is possible to form a film member in which the thickness of each laminated layer can be varied in the widthwise direction. In addition, the apparatus is simple in construction yet very effective in operation and inexpensive to manufacture.

Although a previous design of resin stream combining apparatus does allow variable orientation of the streams initially fed into the passage, see US-A-3,909,170, and, by virtue of a curved passage conveying the combined streams to the T die does effect a change in the positional relationship between the interfaces of the combined streams and the port of the T die, it does not allow the selective rotation of the interfaces between already combined streams.

### BRIEF DESCRIPTION OF THE DRAWINGS

Figs. 1-3 are perspective views illustrating the arrangements of an extrusion machine and a T die when a cast film, a sheet film and a laminate are formed;
Figs. 4(a), (b) and (c) are longitudinal sectional views of the conventional T dies, respectively, used to form a multi-layer film member;

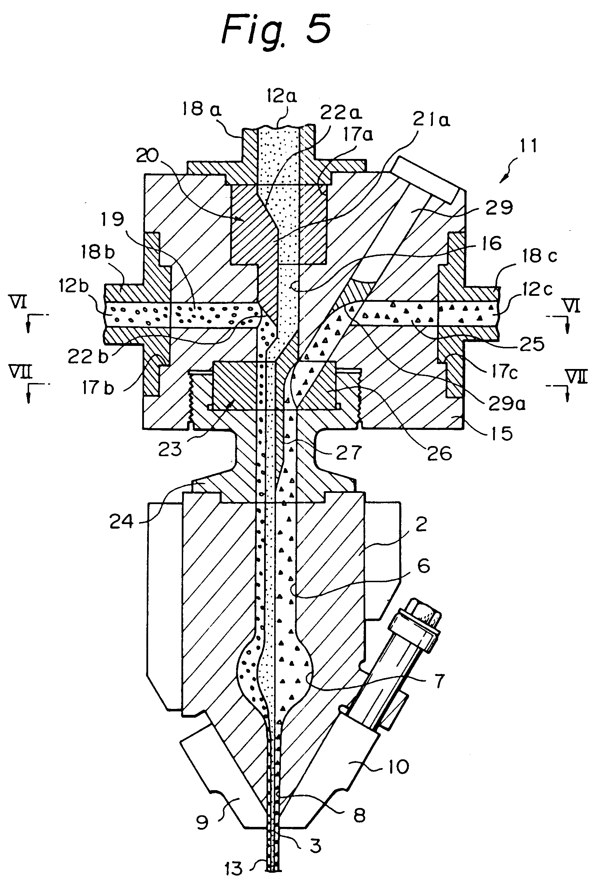

Figs. 5-12 illustrate a first preferred embodiment of an apparatus for feeding a plurality of different molten jets into a T die;
Fig. 5 is a longitudinal sectional view thereof;

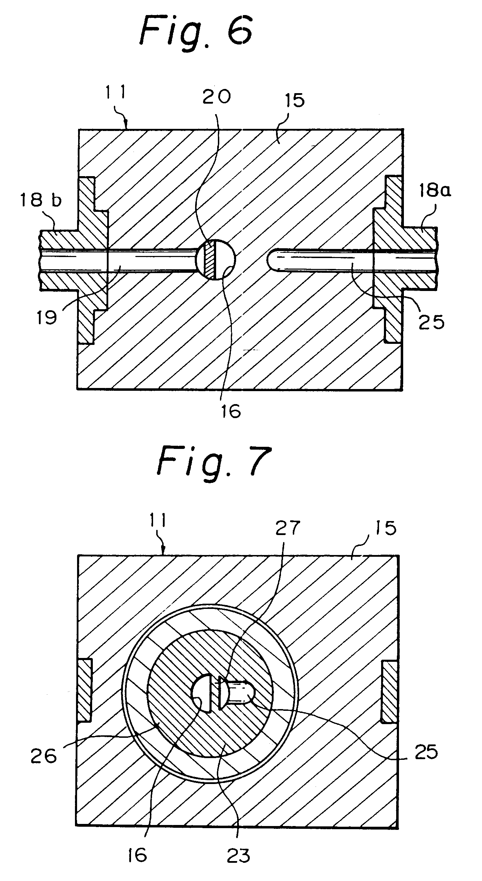

Figs. 6 and 7 are sectional views taken along the line VI-VI and the line VII-VII, respectively, of Fig. 5;

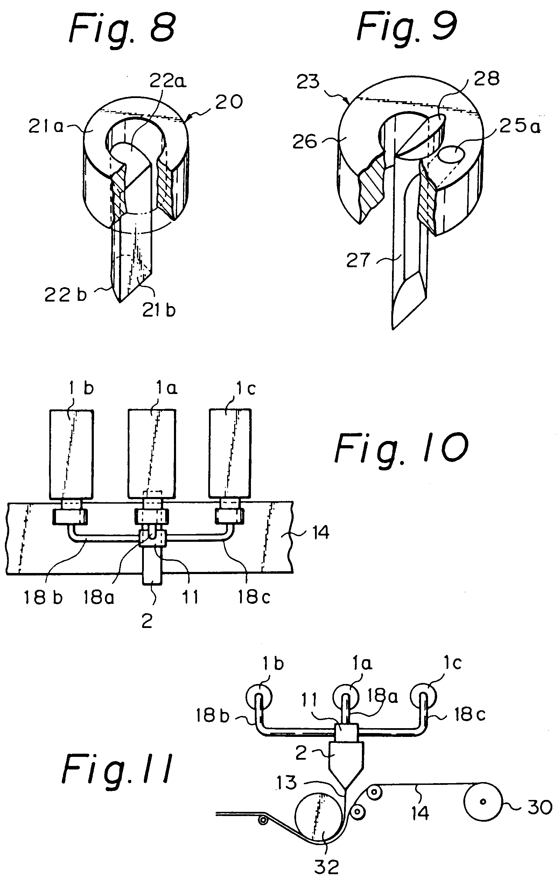

Fig. 8 is a perspective view, with a part cut away, of a first directional control valve;
Fig. 9 is a sectional view with a part cut away of a second directional control valve;

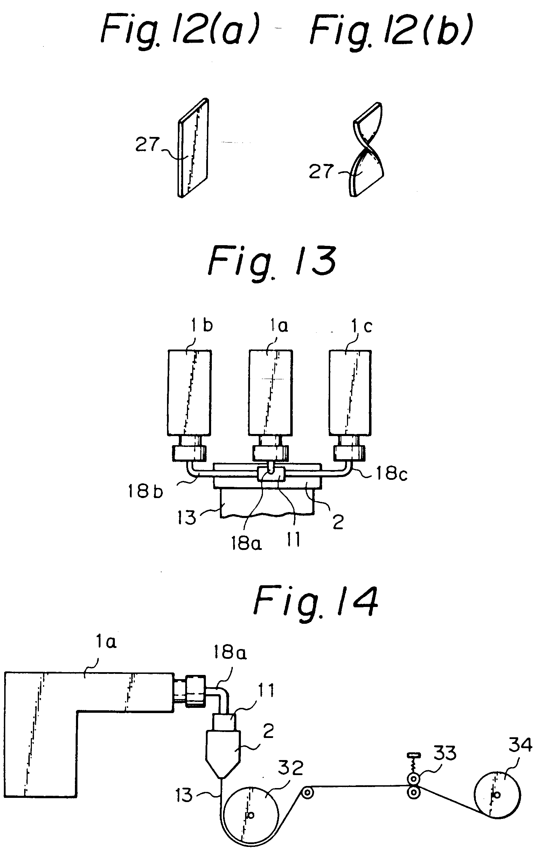

Figs. 10 and 11 are a top view and a front view when the apparatus is used to form laminates;
Figs. 12(a) and (b) are perspective views illustrating the shapes of control tongue members, respectively, used in said second directional control valve;
Figs. 13 and 14 are a top view and a side view, respectively, when the feed apparatus is used to form a cast film;

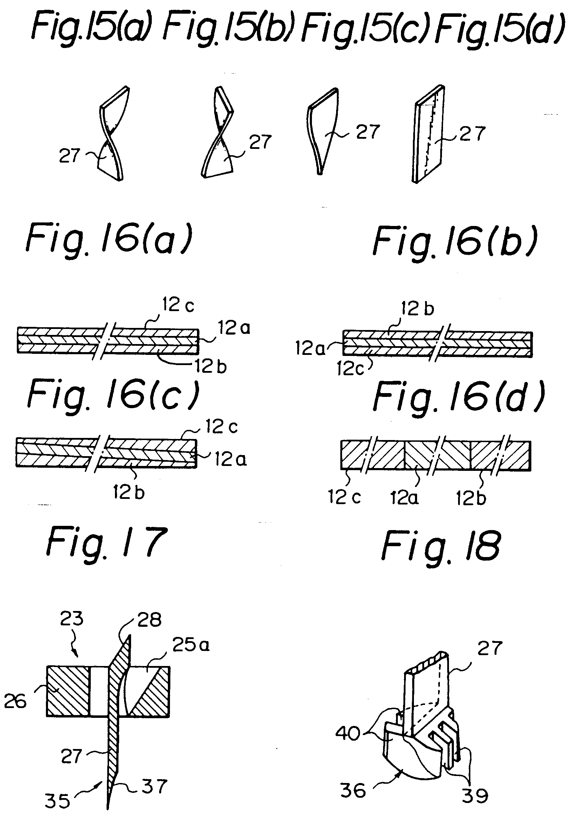

Figs. 15(a), (b), (c) and (d) are perspective views illustrating the shapes of control tongue used in the second directional control valve;
Figs. 16(a), (b), (c) and (d) are sectional views of film members in the widthwise direction thereof which are formed by using the control tongues shown in Figs. 15(a), (b), (c) and (d);
Figs. 17 and 18 illustrate different molten resin jet flow switching means, respectively;

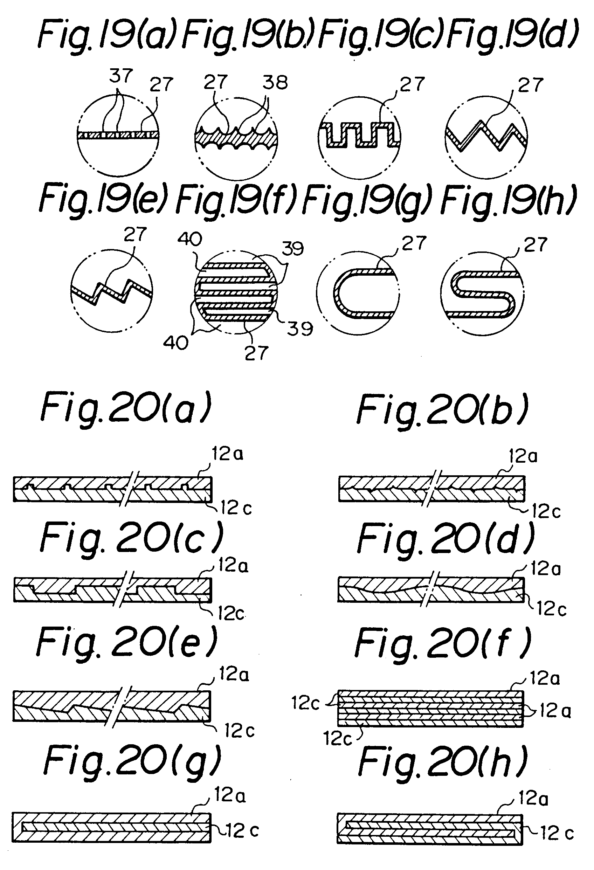

Figs. 19(a), (b), (c), (d) , (e), (f), (g) and (h) are perspective views illustrating different embodiments of molten resin jet switching means;
Figs. 20(a), (b), (c), (d), (e), (f), (g) and (h) are longitudinal sectional views in the widthwise direction of film members formed by the molten resin jet flow switching means shown in Figs. 19(a), (b), (c), (d), (e), (f), (g) and (h); and

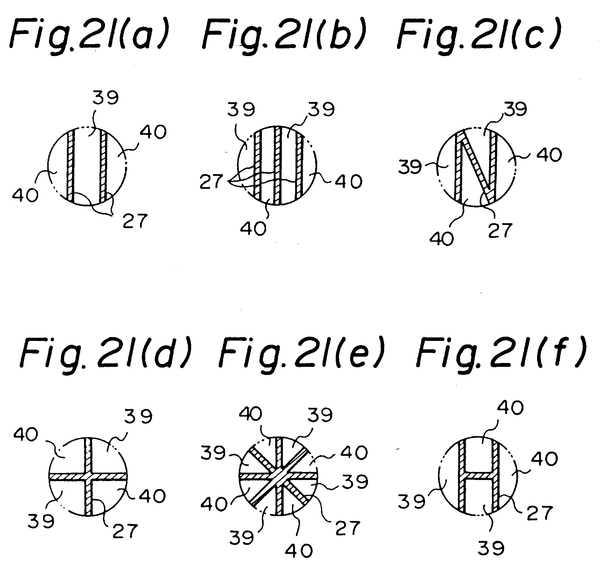

Figs. 21(a), (b), (c), (d), (e) and (f) are cross sectional views of other embodiments, respectively, of molten resin jet flow switching means.

### DESCRIPTION OF THE PREFERRED EMBODIMENT:

Referring now to Figs. 5-21, the preferred embodiment of the present invention will be described.

Figs. 5-12 illustrates a first preferred embodiment of the present invention and same reference numerals are used to designate similar parts used in the first preferred embodiment and the conventional apparatuses.

Fig. 5 illustrates a first preferred embodiment of a feed apparatus in accordance with the present invention which is used when three different molten jets 12a, 12b and 13c extruded three extruders 1a, 1b and 1c as shown in Figs. 10 and 11 are laminated one upon the other to form a three-layer film member 13 which in turn is laminated over a film member 14 to be laminated.

As best shown in Fig. 5, a resin feed passage 16 is vertically extended through a block-shaped main body 15 of the feed apparatus 11. An inlet port 17a at the upper end of the resin feed passage 16 is connected to an adapter 18a for feeding a molten resin jet extruded from the center extruder 1a. An inlet port 17b on the left side of the main body 15 is connected to an adapter 18b which feeds a molten resin jet extruded from the left extruder 1b and is communicated through a feed passage 19 with the vertical resin feed passage 16 so as to feed a molten resin 12b thereinto. Disposed at the lowest portion of the inlet port 17a of the resin feed passage 16 is a first directional control valve 20 so that the molten resins 12a and 12b are united without mixing with each other. As shown in Fig. 8, the first flow control valve 20 has a cylindrical portion 21a whose diameter is equal to that of the resin feed passage 16 and a semicircular portion defined within the cylindrical portion 21a so that the cross section area of the resin feed passage 16 is restricted almost one half of the cross sectional area of the resin feed passage 16. An inclined surface 22a for restricting the cross sectional area of the feed passage 16 is defined at the upper end of the semicircular portion 21b and an inclined surface 22b substantially in parallel with the upper inclined surface 22a is defined at the lowered of the semicircular portion 21b in order to facilitate the union of the molten resin jets 12a and 12b. A second directional control valve 23 is disposed downstream of the joint between the resin feed passage 16 and the communication passage 19 so that a molten resin jet extruded from the extruder 1c is united with the molten resin jets 12a and 12b which are already combined with each other without mixturing with them. The second directional control valve 23 is disposed coaxially of the resin feed passage 16 and is securely mounted in the main body through a connecting cylinder 24 which connected the feed apparatus 11 to a T die 2. An inlet port 17c on the right side of the main body 15 is connected to an adapter 18c for feeding a molten resin jet 12c extruded from the extruder 1c to the right of the extruder 1a. A communication passage 25 for feeding the molten resin 12c from the inlet portion 17c to the resin feed passage 16 is extended through the main body 15 and the second directional control valve 23. As best shown in Fig. 9, the second directional control valve 23 has a cylindrical portion 26 whose diameter is equal to that of the resin feed passage and a control tongue 27 defined with the cylindrical portion 26 so that the molten resin jet 12c is satisfactorily combined with the molten resin jets 12a and 12b which have been already united with each other. The control tongue 27 has an inclined upper end surface 28 which guides the molten resin jet 12a flowing downwardly from the first directional control valve 20 to approach the molten resin jet 12b. The portion of the control tongue 27 extended along the axial length of the cylinder portion 26 has a substantially semicircular cross section. The portion of the control tongue 27 extended downwardly beyond the lower end of the cylindrical portion 26 is in he form of a plate whose thickness is about 1/4 of the diameter of the resin feed passage 16. The lower end of the control tongue 27 is converged so that the combination of the molten resin 12a and the molten flow 12c may be facilitated. A bend portion 25a of the communication passage 25 extended into the main body 15 is fitted with a rod-shaped pressure adjustment rod 29 having a bent surface 29 corresponding to the bent portion of the communication passage in such a way that the pressure adjustment rod 29 is freely movable in the axial direction. By adjusting the position of the bent surface 29a into the bent portion of the communication passage 25, it becomes possible to adjust the pressure of the molten resin jet 12c flowing through the communication passage 25.

Next the mode of the operation of the first embodiment with the above mentioned construction will be described. As shown in Figs. 10 and 11, first the three extruders 1a, 1b and 1c are energized so that molten resin jets fed therefrom through the adapters 18a, 18b and 18c to the inlet ports 17a, 17b and 17c, respectively. Of the molten resin jets 12a, 12b and 12c, the molten resin jets 12a and 12b fed into the feed passage 16 are united at the downstream portion of the cylindrical portion 21a of the first control directional valve 20 in such a way the interface between the molten resin jets (in the direction vertical to Fig. 5) becomes in parallel with the discharge port 3 of the T die (in the direction perpendicular to Fig. 5). Thereafter, at the downstream side of the second directional control valve 23, the molten resin jet or flow 12c is united with the molten resin jets 12a and 12b which have been already united with each or more particularly with the molten resin jet 12a in such a way that the interface between the molten resin jets 12a and 12c becomes in parallel with the longitudinal direction of the discharge port 3 of the T die 2. The three combined molten resin jets are fed to the single inlet port 4 of the T die. The molten resin jets 12a, 12b and 12c flow through the feed passage 6 without mixing with each other into the manifold 7 in which they are expanded in the longitudinal direction thereof. Thereafter they flow through the narrow feed passage 8 and then is discharged as a three-layer film member 13 through the discharge port 3 whose gap is controlled by lips 9 and 10. The three-layer film member is then laminated over a member to be laminated 14 (to be referred to as "a laminate substrate" hereinafter in this specification) unrolled from a supply roll 30. Thereafter they are cooled while passing over the cylindrical outer surface of a chilled roller 32 so that they are positively joined with the laminate substrate 14. Thereafter the laminate thus formed is transported to the succeeding laminating stage or a take-up roll (not shown).

Fig. 12(a) illustrates schematically the control tongue portion 27 downstream of the cylindrical portion 26 of the second control valve 23 in the first preferred embodiment. Furthermore, as shown in Fig. 12(b), as compared with the control tongue 27 shown in Fig. 12(a), when the control tongue 27 is twisted through 180° at the center between the ends about the axis of the resin feed passage 16 so that the film member 13 in which the order of lamination of the molten resin jets 12a, 12b and 12c is reversed may be laminated over the upper surface of the laminate substrate 14. When the control tongue 27 twisted through 180° is extended downward without changing its phase, the inwardly directed components of forces which tend to cause the molten resin jets twisted through 180° in the twisted directions may be damped so that the molten resin jets may be streamlined.

When the extruders 1a, 1b and 1c and the T die 2, which are shown in Figs. 13 and 14 and used to form a laminate in the manner just described above, are used in the formation of a cast film, as shown in Fig. 15(a), the lower portion of the control tongue 27 extended downwardly beyond the lower end of the cylindrical portion 26 of the second directional control valve 23 is twisted in the counterclockwise direction through about 90° about the axis of the resin feed passage 16. Then it becomes possible to feed the molten resin jets 12a, 12b and 12c into the T die after the intersurfaces between the molten resin jets 12a and 12b and between the molten resin jets 12b and 12c are rotated to become in parallel with the longitudinal direction of the discharge port 3 of the T die 2 and then to feed them into the T die. As a result, as shown in Fig. 16(a), the film member 13 in which the thickness of each molten resin jets 12a, 12b and 12c is uniform in the widthwise direction can be obtained.

The film member discharged through the discharge port 3 of the T die 2 is cooled by the chilled roll 32, then is taken up by a pinch roll 33 and is finally taken up by a take-up roll 34.

When the order of lamination of the molten resin jets 12a, 12b and 12c shown in Fig. 16(a) is reversed so that the succeeding processing step may be carried out satisfactorily or the inner and outer surface of the film member taken up by the take-up roll 34 may be determined in a desired manner, as shown in Fig. 15(b), the control tongue portion 27 extended downwardly beyond the lower end of the cylindrical portion 26 of the second directional control valve 23 is twisted through about 90° about the axis of the resin feed passage 16 in the clockwise direction. As a result, as shown in Fig. 16(b) a film member 13 in which the order of lamination of the molten resin jets or flows 12a, 12b and 12c is reversed is discharged.

As described above, according to the present invention, when the relative position of the T die 2 with respect to the previously disposed extruders 1a, 1b and 1c is changed to select one of various formation methods, it suffices to select a second directional control valve 23 having one of the control tongues as shown inn Fig. 12(a) and (b) and Figs. 15(a) and (b) adapted to define the construction of a desired film member 13. As a result, unlike the conventional methods and apparatus, it is not needed to select and change the adapters 5a and 5b depending upon a desired formation method. Furthermore, despite of forming a multi-layer film member 13, the T die to be used may have the single-extrusion type construction as shown in Fig. 5 so that the T die 2 can be made extremely simple in construction and at inexpensive costs.

So far it has been described that the thickness of a plurality of molten resin layers are uniform in the widthwise direction of the film member and next a film member 13 whose molten resin layers 12a, 12b and 12c are varied in thickness in the widthwise direction of the film member 13 will be described.

In the case of the production of a cast film by the apparatus shown in Figs. 13 and 14, when the control tongue 27 of the second directional control valve 23 is twisted through about 15° about the resin feed passage 16 as shown in Fig. 15(c), the molten resin jets 12a, 12b and 12c are fed into the T die 2 in such a way that the interfaces of the molten resin jets are inclined with respect to the longitudinal direction of the discharge port 3 of the T die 2. As a result, as shown in Fig. 16(c), the thickness of the outer layers 12a, 12b and 12c are gradually varied in the widthwise direction of the film member 13. In the case of the film member as shown in Fig. 16(c), when the outer layers 12b and 12c have different colors, when one views the film member 13, he/she will notice that the color of the film member 13 varies gradually in the widthwise direction. Furthermore, one of the molten resin layers 12b and 12c is a resin having a high degree of thermal adhesive force and is used for thermal welding of a thicker portion. Then thermal welding with a considerably higher degree of reliability can be obtained.

In the case of the production of a cast film, when a flat control tongue 27 is used in the second directional control valve 23 as shown in Fig. 15(d), the intersurface between the molten resin streams 12a, 12b and 12c which are fed into the T die become perpendicular to the longitudinal direction of the discharge port 3 of the T die 2, as shown in Fig. 16(d) the film member 13 consists of the molten resin streams 12a, 12b and 12c each arranged as one layer in the widthwise direction. In this case, while the film member 13 is transported through the chilled roller 32 and a pair of pinch rollers 33 to the take-up roll 34, each molten resin streams are cut off and separated from each other by cutters (not shown) and each cut-off resin layer may be taken up by a different take-up roll 34. Therefore three kinds of single-layer film members 13 whose thickness is determined at a high degree of accuracy can be obtained.

The film members as shown in Fig. 16(c) and (d) are formed by suitably adjusting the twist of the tongues in the second directional control valve 23 as shown in Fig. 15(c) and (d).

Next the film member 13 in which the thickness of each molten resin layer is varied in the widthwise direction of the film member 13 by incorporating a resin stream changing member 35 in the second directional control valve 23 will be described.

As shown in Fig. 17, the resin stream changing member 35 is formed by integrally connecting to the lower end of the control tongue 27 of the second directional control valve 23 or by integrally forming a conical member 36 at the lower end of the control tongue 27 as shown in Fig. 18.

In Figs. 17 and 19(a), the resin stream changing member 35 is in the form of a plurality of small holes 37 extended through the control tongue 27 in the direction of thickness thereof. For the sake of better understanding of the resin stream changing member 35, it is assumed that the molten resin streams 12a and 12c are flowing at both sides, respectively, of the control tongue 27. Then the molten resin stream at a higher pressure flows through the small holes 37 into the molten resins stream at a lower pressure. As a result, as shown in section in Fig. 20(a), the molten resin stream 12c is instructed in some portions into the molten resin stream 12a so that the contact between the molten resin streams 12a and 12c becomes three dimensional. As a result, the surface of contact is increased in area so that the joint strength between them can be increased.

The control tongues as shown in Fig. 19(b) have some convex portions so that as shown in Fig. 20(b), the joint force between the molten resin layers 12a and 12c is increased.

The control tongues as shown in Figs. 19(c), (d) and (e) have a zig-zag cross section so that as shown in Figs. 20(c), (d) and (e), the joint force between the molten resin layers 12a and 12c is increased.

In Fig. 18 and 19(f), the conical member 36 is formed with three passages 39 for introducing the molten resin stream 12a into the T die 2 and three passages 40 for introducing the molten resin stream 12c into the T die 2. In this case, the first and second mentioned passages 39 and 40 are defined alternately so that as shown in Fig. 20(f) a film member 13 in which three layers of the molten resin streams 12a and three layers of the molten resin streams 12c are alternately laminated can be obtained.

Like the molten resin stream changing member shown in Fig. 18 and 19(f), the molten resin stream changing members shown in Figs. 19(g) and (h) are also in the form of a cone 36 so that the film members 13 in which the molten resin streams 12a and 12c are laminated as shown in Figs. 20(g) and (h) are obtained.

Furthermore, as shown in Figs. 21(a), (b), (c), (d), (e) and (f), the arrangements of the passages 39 and 40 for flowing the molten resin streams 12a and 12c, respectively, are varied in the lowermost portion of the cone 36 so that the thickness of each of the molten resin jet streams 12a and 12c may be varied according to the desin of a desired molten resin film 13.

Moreover, in order to vary the thickness of each of the molten resin jet streams 12a and 12c in the direction of thickness of the film member 13, the adjustment of a degree of twist of the control tongue 27 used in the second directional control valve 23 and the adjustment of the directions of the molten resin jet streams by the molten resin stream changing member 35 are suitably combined so that a further excellent film member 13 can be obtained by the synergistic effect of the control tongue 27 and the molten resin jet stream changing member 35.

So far it has been described that two kinds of molten resin jet streams are used in the above embodiments, but it is to be understood that the present invention may be equally applied to use more than three molten resin jet streams 12a, 12b and 12c.

As described above, according to the present invention, it becomes very simple to obtain a high quality film member 13 in which the thickness of each of a plurality of molten resin jet streams 12a, 12b and 12c is varied in the widthwise direction of the film member 13.

When it is desired to feed more than four kinds of molten resin jet streams into the T die, a correponding number of directional control valves may be used.

## Claims

1. A method for feeding a plurality of molten resin jet streams (12a, 12b) into a T die (2) of the type in which a plurality of molten resin jet streams flowing from their predetermined directions into a single resin passage extending through said T die (2) are combined without mixing with each other, the molten resin jet streams thus combined being then fed into said T die (2), the method comprising adjusting, depending upon the construction of a film member (13) to be produced, the relative positional relationship between the interfaces of said combined molten resin jet streams (12a, 12b) in said resin feed passage with respect to an elongated discharge port (3) of said T die (2), characterised in that said adjustment of the relative positional relationship between said interfaces comprises a twisting rotation of said interfaces through a selectable predetermined angle about the axis of the resin feed passage (6), said adjustment being subsequent to the formation of said interfaces.

2. Apparatus for feeding a plurality of molten resin jet streams (12a, 12b) into a T die (2) comprising a resin feed passage in communication with said T die (2) and a directional control valve (20) which combines a plurality of molten resin jet streams (12a, 12b) flowing from respective predetermined directions into said resin feed passage without causing mixing thereof, said apparatus including adjustment means (23) for adjusting the relative positional relationship between the interfaces of said combined molten resin jet streams (12a, 12b) in said resin feed passage with respect to an elongated discharge port (3) of said T die (2), characterised in that said adjustment means (23) comprises means (23) for effecting a twisting rotation of said interfaces through a selectable predetermined angle about the axis of the resin feed passage (6), said adjustment means (23) being disposed downstream of said directional control valve (20).

3. Apparatus as claimed in Claim 2 characterised in that said means for effecting rotation includes a second control valve (23), said second control valve (23) including a control tongue (27) which is axially elongated and twisted about its axis of elongation so as to rotate the interfaces of the combined resin jet streams (12a, 12b), the degree of said twist determining the degree of rotation of the interfaces of said combined streams.

4. Apparatus as claimed in Claim 3 characterised in that the control tongue (27) terminates in a portion which is tapered to a knife edge.

5. An apparatus as claimed in Claim 3 characterised in that said second control valve (23) includes a resin flow changing member (35) which changes a combined pattern of a plurality of molten resin jet streams (12a, 12b) so that each of the molten resin layers of a film member (13) is varied in thickness in the widthwise direction.

6. Apparatus as claimed in Claim 5 characterised in that said resin flow changing member (35) comprises a member (36) attached to the control tongue (27) which substantially fills the cross sectional area of the resin feed passage and in which there is at least one slot (39), substantially parallel to the axis of said passage, through which molten resin may pass.

7. Apparatus as claimed in any one of Claims 3 to 6 characterised in that an additional molten resin jet stream (12c) is combined, without mixing, with the combined molten resin jet streams (12a, 12b), after rotation of the interfaces of said combined molten resin jet streams.

8. Apparatus as claimed in any one of Claims 3 to 7 characterised in that the second control valve (23) is configured such that at least two passages pass through it, the first passage being the passage containing the combined molten resin jet streams (12a, 12b) and the second passage containing at least one additional molten resin jet stream (12c), and the second passage converges with the first passage.

9. Apparatus as claimed in any of Claims 3 to 8 characterised in that there are provided slots, holes, perforations or apertures in the control tongue (27).

## Patentansprüche

1. Verfahren zum Zuführen einer Vielzahl schmelzflüssiger Harzstrahlen (12a, 12b) in eine T-förmige Düse (2), in der eine Vielzahl schmelzflüssiger Harzstrahlen, die aus ihren vorgegebenen Richtungen in einen einzelnen, sich durch die T-förmige Düse (2) erstreckenden Harzkanal fließen, vereinigt werden, ohne sich miteinander zu vermischen, wobei die auf diese Weise vereinigten, schmelzflüssigen Harzstrahlen dann in die T-förmige Düse (2) geführt werden, und das Verfahren das Einstellen des relativen Lageverhältnisses zwischen den Grenzflächen der vereinigten, schmelzflüssigen Harzstrahlen (12a, 12b) indem Harzzuführungskanal in Bezug auf eine längliche Austragsöffnung (3) der T-förmigen Düse (2) in Abhängigkeit vom Aufbau eines herzustellenden Folienelementes (13) umfaßt, gekennzeichnet dadurch, daß die Einstellung des relativen Lageverhältnisses zwischen den Grenzflächen eine Spiraldrehung der Grenzflächen um einen auswählbaren, vorgegebenen Winkel um die Achse des Harzzuführungskanales (6) umfaßt, wobei die Einstellung nach der Bildung der Grenzflächen erfolgt.

2. Vorrichtung zum Zuführen einer Vielzahl schmelzflüssiger Harzstrahlen (12a, 12b) in eine T-förmige Düse (2), umfassend einen in Verbindung mit der T-förmigen Düse (2) stehenden Harzzuführungskanal und ein Wegeventil (20), das eine Vielzahl schmelzflüssiger Harzstrahlen (12a, 12b), die aus entsprechenden vorgegebenen Richtungen in den Harzzuführungskanal fließen, ohne sie miteinander zu vermischen vereinigt, wobei die Vorrichtung Einstellungsmittel (23) zum Einstellen des relativen Lageverhältnisses zwischen den Grenzflächen der vereinigten, schmelzflüssigen Harzstrahlen (12a, 12b) in dem Harzzuführungskanal in Bezug auf eine längliche Austragsöffnung (3) der T-förmigen Düse (2) umfaßt,gekennzeichnet dadurch, daß das Einstellungsmittel (23) Mittel (23) zum Bewirken einer Spiraldrehung der Grenzflächen um einen auswählbaren, vorgegebenen Winkel um die Achse des Harzzuführungskanales (6) umfaßt, wobei das Einstellungsmittel (23) stromabwärts von dem Wegeventil (20) angeordnet ist.

3. Vorrichtung nach Anspruch 2, gekennzeichnet dadurch, daß das Mittel zum Bewirken der Drehung ein zweites Steuerventil (23) umfaßt, wobei das zweite Steuerventil (23) eine Steuerzunge (27) umfaßt, die axial verlängert und um ihre Längsachse verdreht ist, um die Grenzflächen der vereinigten Harzstrahlen (12a, 12b) zu drehen, wobei der Grad dieser Verdrehung den Grad der Drehung der Grenzflächen der vereinigten Ströme bestimmt.

4. Vorrichtung nach Anspruch 3, gekennzeichnet dadurch, daß die Steuerzunge (27) in einem Teil endet, das zu einer Messerschneide verjüngt ist.

5. Vorrichtung nach Anspruch 3, gekennzeichnet dadurch, daß das zweite Steuerventil (23) ein Harzdurchflußänderungselement (35) umfaßt, das ein vereinigtes Muster einer Vielzahl schmelzflüssiger Harzstrahlen (12a, 12b) so verändert, daß jede der schmelzflüssigen Harzschichten eines Folienelementes (13) in Richtung der Breite in der Dicke verändert ist.

6. Vorrichtung nach Anspruch 5, gekennzeichnet dadurch, daß das Harzdurchflußänderungselement (35) ein an der Steuerzunge (27) befestigtes Element (36) umfaßt, das im wesentlichen die Querschnittsfläche des Harzzuführungskanales ausfüllt und in dem sich mindestens ein zu der Achse des Kanales im wesentlichen paralleler Schlitz (39) befindet, durch den das schmelzflüssige Harz hindurchgehen kann.

7. Vorrichtung nach einem der Ansprüche 3 bis 6, gekennzeichnet dadurch, daß ein zusätzlicher schmelzflüssiger Harzstrahl (12c) mit den vereinigten, schmelzflüssigen Harzstrahlen (12a, 12b) nach der Drehung der Grenzflächen der vereinigten, schmelzflüssigen Harzstrahlen ohne Vermischen vereinigt wird.

8. Vorrichtung nach einem der Ansprüche 3 bis 7, gekennzeichnet dadurch, daß das zweite Steuerventil (23) so aufgebaut ist, daß mindestens zwei Kanäle durch dieses hindurchgehen, wobei der erste Kanal der Kanal ist, der die vereinigten, schmelzflüssigen Harzströme (12a, 12b) enthält, und der zweite Kanal mindestens einen zusätzlichen schmelzflüssigen Harzstrom (12c) enthält, und der zweite Kanal mit dem ersten Kanal zusammenläuft.

9. Vorrichtung nach einem der Ansprüche 3 bis 8, gekennzeichnet dadurch, daß in der Steuerzunge (27) Schlitze, Löcher, Perforationen oder Öffnungen vorgesehen sind.

## Revendications

1. Procédé pour alimenter par une pluralité de courants de résines fondues (12a, 12b) une filière en T (2) du type dans lequel une pluralité de courants de résines fondues s'écoulant à partir de leurs directions prédéterminées et pénétrant dans un passage de résines unique traversant ladite filière en T (2) sont combinés sans se mélanger les uns aux autres, les courants de résines fondues ainsi combinés étant alors introduits dans ladite filière en T (2), le procédé comprenant l'étape d'ajuster, en fonction de la construction d'un élément de film (13) à produire, la répartition des positions relatives des interfaces desdits courants de résines fondues combinés (12a, 12b) dans ledit passage d'alimentation en résines par rapport à un orifice de décharge allongé (3) de ladite filière en T (2), caractérisé en ce que ledit ajustement de la position relative entre lesdits interfaces comprend une rotation de torsion desdits interfaces selon un angle prédéterminé à choisir autour de l'axe du passage d'alimentation en résines (6), ledit ajustement étant postérieur à la formation desdits interfaces.

2. Appareil pour alimenter par une pluralité de courants de résines fondues (12a, 12b) une filière en T (2) comprenant un passage d'alimentation en résines en communication avec ladite filière en T (2) et une vanne de commande directionnelle (20) qui combine une pluralité de courants de résines fondues (12a, 12b) s'écoulant à partir de directions prédéterminées respectives et pénétrant dans ledit passage d'alimentation en résines sans provoguer leur mélange, ledit appareil comprenant un moyen d'ajustement (23) pour ajuster la répartition des positions relatives des interfaces desdits courants de résines fondues combinés (12a, 12b) dans ledit passage d'alimentation en résines par rapport à un orifice de décharge allongé (3) de ladite filière en T (2), caractérisé en ce que ledit moyen d'ajustement (23) comprend un moyen (23) pour effectuer une rotation de torsion desdits interfaces selon un angle prédéterminé à choisir autour de l'axe du passage d'alimentation en résines (6), ledit moyen d'ajustement (23) étant disposé en aval de ladite vanne de commande directionnelle (20).

3. Appareil selon la revendication 2 caractérisé en ce que ledit moyen pour effectuer une rotation comprend une seconde vanne de commande (23), ladite seconde vanne de commande (23) comprenant une languette de commande (27) qui est allongée axialement et tordue autour de son axe d'allongement de façon à faire pivoter les interfaces des courants de résines combinés (12a, 12b), le degré de ladite torsion déterminant le degré de rotation des interfaces desdits courants combinés.

4. Appareil selon la revendication 3 caractérisé en ce que la languette de commande (27) se termine en une portion qui est biseautée jusqu'à un bord de couteau.

5. Appareil selon la revendication 3 caractérisé en ce que ladite seconde vanne de commande (23) comprend un élément de modification de flux de résines (35) qui modifie la disposition combinée d'une pluralité de courants de résines fondues (12a, 12b) de telle sorte que chacune des couches de résines fondues d'un élément de film (13) est modifiée en épaisseur dans la direction de la largeur.

6. Appareil selon la revendication 5 caractérisé en ce que ledit élément de modification de flux de résines (35) comprend un élément (36) fixé à la languette de commande (27) qui remplit sensiblement la surface de section transversale du passage d'alimentation en résines et dans lequel il y a au moins une fente (39), sensiblement parallèle à l'axe dudit passage, à travers laquelle peut passer de la résine fondue.

7. Appareil selon l'une quelconque des revendications 3 à 6 caractérisé en ce qu'un courant additionnel de résines fondues (12c) est combiné, sans mélange, avec les courants combinés de résines fondues (12a, 12b), après rotation des interfaces desdits courants combinés de résines fondues.

8. Appareil selon l'une quelconque des revendications 3 à 7 caractérisé en ce que la seconde vanne de commande (23) est configurée de telle sorte qu'au moins deux passages la traversent, le premier passage étant le passage contenant les courants combinés de résines fondues (12a, 12b) et le second passage contenant au moins un courant additionnel de résines fondues (12c), et le second passage converge avec le premier passage.

9. Appareil selon l'une quelconque des revendications 3 à 8 caractérisé en qu'on prévoit des fentes, des trous, des perforations ou des ouvertures dans la languette de commande (27).
